(19) Europäisches Patentamt
European Patent Office
Office européen des brevets

(11) EP 2 498 159 B1

(12) FASCICULE DE BREVET EUROPEEN

(45) Date de publication et mention
de la délivrance du brevet:
**04.06.2014 Bulletin 2014/23**

(51) Int Cl.:
***G05D 1/06*** *(2006.01)*

(21) Numéro de dépôt: **12158012.0**

(22) Date de dépôt: **05.03.2012**

(54) **Procédé pour optimiser l'atterrissage d'un aéronef sur une piste.**

Verfahren zur Optimierung der Landung eines Luftfahrzeugs auf einer Piste.

Method for optimising the landing of an aircraft on a runway.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.03.2011 FR 1151865**

(43) Date de publication de la demande:
**12.09.2012 Bulletin 2012/37**

(73) Titulaires:
• **Airbus Opérations SAS
31060 Toulouse (FR)**
• **Airbus (S.A.S.)
31700 Blagnac (FR)**

(72) Inventeurs:
• **Dumoulin, Anne
31100 TOULOUSE (FR)**
• **Scheuermann, Martin
31330 MERVILLE (FR)**

(74) Mandataire: **Gevers France
41, avenue de Friedland
75008 Paris (FR)**

(56) Documents cités:
**US-A- 5 337 982      US-A1- 2009 050 746**

**Description**

La présente invention concerne un procédé d'optimisation de l'atterrissage d'un aéronef sur une piste, ainsi qu'un dispositif d'optimisation correspondant.

Il est connu que, selon les règles de procédure standard, pour atterrir, un aéronef (par exemple un avion de transport civil) passe d'une altitude de début de descente à une altitude de début d'approche finale :

- soit en effectuant une descente à vitesse constante puis un palier d'approche défini, par exemple, par une altitude de 3000 pieds (soit environ 914 mètres), pour décélérer puis se stabiliser à une vitesse intermédiaire prédéterminée, l'aéronef se maintenant sur ce palier, avec cette vitesse intermédiaire, jusqu'à ce qu'il intercepte un axe d'approche finale prédéfini ;
- soit en pratiquant une approche en descente continue, selon laquelle le palier de décélération à altitude constante est supprimé, de sorte que l'aéronef descende et décélère simultanément, cette étape étant éventuellement décomposée en plusieurs sections ayant chacune des pentes de descente spécifiques.

L'interception du palier d'approche, ou du dernier segment de l'approche en descente continue, et de l'axe d'approche définit l'amorce de la phase d'approche finale.

La pente standard associée à cet axe d'approche et définie par rapport au sol (de sorte qu'elle est désignée « pente sol » par la suite) est habituellement fixée à -3°. Lors de la phase d'approche, l'aéronef décélère de nouveau en suivant l'axe d'approche, tout en déployant les becs, les volets et les trains d'atterrissage, afin de présenter une configuration d'atterrissage. Au voisinage de 1000 pieds (soit environ 305 mètres), l'aéronef conserve une approche stabilisée à une vitesse d'approche prédéfinie (qui est notamment fonction de la configuration de l'aéronef et des conditions météorologiques) jusqu'à 50 pieds (soit environ 15 mètres), puis initialise son arrondi pour rejoindre la piste et achever l'atterrissage.

On sait de plus que, pour éviter des obstacles (par exemple formés par le relief, les bâtiments, etc...), une phase d'approche à pente sol augmentée (c'est-à-dire que l'on passe, par exemple, d'une pente sol standard de -3° à une pente sol de -4°) peut être effectuée. On notera que, quelle que soit la pente sol finale à suivre, celle-ci est publiée dans les procédures opérationnelles d'approche, définies par les autorités aériennes.

On sait également que, en plus des considérations de sécurité aérienne, une phase d'approche à pente sol augmentée permet de réduire les impacts environnementaux aux alentours des aéroports (notamment le bruit et les émissions polluantes), puisque, par construction géométrique, l'aéronef vole plus haut pour une même distance au seuil de piste et que le régime moteur nécessaire à la tenue de cette pente est plus faible en général. Cela explique la volonté des différents acteurs du monde aéronautique (avionneurs, aéroports, compagnies aériennes) de développer des approches à pente sol augmentée.

Par ailleurs, on sait que les aéronefs dédiés au transport civil réalisent généralement leur approche finale sur une pente sol fixée à -3°, tout en étant certifiés pour voler jusqu'à des pentes sol de -4,49°. Au-delà de cette valeur de pente, la phase d'approche est considérée, par la réglementation internationale, comme une approche sur une pente raide et l'aéronef doit répondre à des exigences de certifications supplémentaires.

Bien que ces pentes sol augmentées (c'est-à-dire plus élevées que -3° mais inférieures à -4,5°) soient régulièrement suivies sur de nombreux aéroports internationaux pour éviter des obstacles, il n'est pas rare que l'aéronef atterrisse brutalement (on parle dans ce cas d'un atterrissage « dur »), ce qui est susceptible de compromettre la bonne tenue de l'aéronef, notamment lorsque de tels atterrissages durs se répètent quotidiennement.

Autrement dit, pour supporter des approches régulières à pente sol augmentée (égale par exemple à -4°), il est indispensable de revoir les critères de conception de l'aéronef en termes de performances, de manoeuvrabilité, ou bien encore de structure, de manière à garantir un atterrissage sécurisé quelles que soient les caractéristiques de l'aéronef, les conditions météorologiques et les situations géographiques aux abords des aéroports.

En effet, l'augmentation de la pente sol lors d'une approche finale entraîne, d'une part, une augmentation de la vitesse verticale de l'aéronef par rapport au sol (encore désignée « vitesse verticale sol » par la suite) et, d'autre part, une diminution des capacités de décélération de l'aéronef (à l'origine des atterrissages durs). On peut par exemple montrer que, dans le cas d'une vitesse Vgs conventionnelle, une augmentation de -1° d'une pente sol initialement à -3° (soit une pente sol augmentée égale à -4°) peut conduire à un accroissement de la vitesse verticale Vz de plus de 30%.

Une augmentation de la pente sol (et donc de la vitesse verticale sol) implique une révision des capacités de manoeuvrabilité, de décélération, voire un redimensionnement des trains d'atterrissage, aboutissant à une charge embarquée supplémentaire, à des modifications importantes des systèmes de l'aéronef, ainsi qu'à la nécessité d'une formation adaptée des pilotes.

Par ailleurs, on connaît :

- par le document US 2009/050746, un procédé et un dispositif pour protéger un avion contre un atterrissage dur. Pour ce faire, le dispositif comporte des moyens pour calculer des ordres de commande de protection contre un atterrissage dur et les moyens pour appliquer ces ordres de commande à des surfaces de contrôle qui agissent sur la vitesse verticale de l'avion ; et

- par le document US 5 337 982, un appareil et une méthode pour contrôler le profil vertical d'un aéronef, à l'aide notamment d'un système de gestion de vol.

La présente invention a pour objet de remédier à ces inconvénients.

A cette fin, selon l'invention, le procédé pour optimiser l'atterrissage d'un aéronef sur une piste, ledit atterrissage comprenant une phase d'approche, définie par un axe d'approche à suivre auquel est associée une pente sol prédéfinie, et une phase d'arrondi, est remarquable en ce que :

- dans une étape préliminaire :

  • on définit, à partir des performances et des caractéristiques propres audit aéronef, une vitesse verticale cible par rapport au sol à appliquer audit aéronef à l'initiation de la phase d'arrondi; et
  • on détermine, en fonction de ladite vitesse verticale cible et d'au moins un paramètre extérieur, une pente sol optimisée, associée à l'axe d'approche, qui est supérieure ou égale à la pente sol prédéfinie, et

- dès l'interception, par l'aéronef, de l'axe d'approche, on guide ledit aéronef pour qu'il suive la pente sol optimisée déterminée, associée audit axe d'approche, et qu'il atteigne la vitesse verticale cible préalablement définie à l'initiation de la phase d'arrondi.

Ainsi, grâce à l'invention, on optimise la pente sol de l'axe d'approche, lors de la phase d'approche, en déterminant une pente sol optimisée (par rapport à la pente sol issue des règles de procédure standard) à partir d'une vitesse verticale cible prédéfinie à l'aide de caractéristiques propres à l'aéronef et d'un ou plusieurs paramètres extérieurs, tels que ceux associés aux conditions météorologiques, aux conditions environnementales et aux caractéristiques propres à l'aéronef.

En effet, il a été démontré que l'arrondi effectué lors d'un atterrissage d'un aéronef dépend quasiment exclusivement de la vitesse verticale sol de l'aéronef, de sorte qu'elle forme un paramètre efficace pour caractériser l'arrondi et procure une indication sur la capacité de l'aéronef à assurer un atterrissage sécurisé et à éviter une remise des gaz inopportune. La présente invention met en outre à profit le fait que les paramètres extérieurs précités viennent perturber les capacités de décélération de l'aéronef, à pente sol fixée, et augmenter le risque de voir l'aéronef atterrir brutalement sur la piste, de sorte qu'une prise en compte de ces derniers dans le calcul de la pente sol optimisée permet de réduire le risque d'atterrissages durs.

Autrement dit, en fixant la vitesse verticale sol de l'aéronef à l'initiation de l'arrondi (à environ 50 pieds) à une valeur cible nominale préalablement définie, la présente invention permet de sécuriser la phase d'approche finale en proposant un arrondi plus constant, répétitif et aisé, tout en augmentant la pente en profitant des conditions de l'approche considérée pour améliorer les aspects environnementaux, sans imposer de nouvelles contraintes de conception.

Plus la pente sol de l'axe d'approche est élevée, plus le régime moteur de l'aéronef est faible le long de l'axe d'approche, ce qui réduit la pollution atmosphérique et sonore, ainsi que la consommation en carburant de l'aéronef.

De surcroît, le procédé d'optimisation de la présente invention présente également l'avantage de pouvoir être mis en oeuvre:

- aisément au sein de tout aéronef ;
- sans modification structurale de l'aéronef ;
- sans modification des lois de pilotage ou de la configuration aérodynamique de l'aéronef ;
- sans modification des procédures opérationnelles ;
- sans impact sur le contrôle aérien ;
- sans modification des infrastructures aéroportuaires au sol ; et
- sans certification supplémentaire spécifique à ce concept.

De préférence, le ou les paramètres extérieurs appartiennent au groupe de paramètres comprenant :

- la vitesse corrigée CAS de l'aéronef par rapport à l'air. Cette vitesse CAS est fonction de la masse de l'aéronef et de la configuration de vol de l'aéronef associée à la phase d'approche, de sorte que, en faisant intervenir la vitesse CAS dans la détermination de la pente optimisée, on tient compte de ces deux derniers paramètres (masse M, configuration de vol) ;
- la température extérieure à une hauteur standard ;
- la vitesse horizontale du vent
- l'inclinaison de la piste par rapport à l'horizontale ; et
- l'altitude de la piste.

De préférence, la pente sol optimisée est déterminée à partir de la vitesse verticale cible, de la vitesse corrigée CAS, de la vitesse horizontale du vent, de la température extérieure à une hauteur standard, ainsi que de l'inclinaison et de l'altitude de la piste.

En outre, la vitesse horizontale du vent, prise en compte lors de la détermination de la pente sol optimisée, appartient à une plage déterminée de valeurs pouvant être obtenues à partir de plusieurs solutions technologiques.

Par ailleurs, pour déterminer la pente sol optimisée, on effectue de préférence les étapes suivantes :

- on détermine la densité de l'air à la hauteur standard à partir de la température extérieure et de l'altitude de la piste ;

- on détermine la vitesse vraie TAS de l'aéronef par rapport à l'air à partir de la vitesse CAS et de la densité de l'air déterminée
- on détermine la pente sol optimisée à partir de la vitesse verticale cible, de la vitesse vraie TAS déterminée, de la vitesse horizontale du vent et de l'inclinaison de la piste.

Dans un mode de réalisation particulier, la détermination de la pente sol optimisée est obtenue par construction géométrique d'un triangle des vitesses.

En outre, la vitesse verticale cible peut être définie au préalable pour chaque type d'aéronef.

Pour ne pas réduire les marges de sécurité imposées par les autorités de sécurité aérienne, la pente sol optimisée est comprise entre une valeur extrême inférieure et une valeur extrême supérieure prédéfinies, de préférence égales respectivement à -3° et à -4,49°.

Par ailleurs, la vitesse horizontale du vent peut être obtenue selon au moins une des façons suivantes :

- par mesure du vent au niveau de la tour de contrôle de la piste considérée, sans prise en compte des rafales ;
- par récupération de données mesurées directement par un ou plusieurs autres aéronefs situés dans un voisinage de la piste.

La présente invention concerne de plus un dispositif pour optimiser l'atterrissage d'un aéronef sur une piste, ledit atterrissage comprenant une phase d'approche, définie par un axe d'approche à suivre auquel est associée une pente sol prédéfinie, et une phase d'arrondi. Selon l'invention, un tel dispositif comprend :

- des moyens pour déterminer, en fonction d'au moins un paramètre extérieur et d'une vitesse verticale cible préalablement définie à partir des performances et des caractéristiques propres audit aéronef, une pente sol optimisée associée à l'axe d'approche à suivre qui est supérieure ou égale à la pente sol prédéfinie; et
- des moyens pour guider l'aéronef dès l'interception par ce dernier de l'axe d'approche, afin qu'il suive la pente sol optimisée déterminée, associée audit axe d'approche, et qu'il atteigne la vitesse verticale cible préalablement définie à l'initiation de la phase d'arrondi.

En outre, la pente sol optimisée étant déterminée à partir de ladite vitesse verticale cible, de la vitesse corrigée CAS, de la vitesse horizontale du vent, de la température extérieure à une hauteur standard, ainsi que de l'inclinaison et de l'altitude de la piste, lesdits moyens de détermination comprennent de préférence :

- des moyens pour calculer la densité de l'air à la hauteur standard en fonction de la température extérieure et de l'altitude de la piste ;

- des moyens pour calculer la vitesse vraie TAS de l'aéronef par rapport à l'air à partir de la vitesse CAS et de la densité de l'air déterminée ; et
- des moyens pour calculer la pente sol optimisée à partir de la vitesse verticale cible, de la vitesse vraie TAS déterminée, de la vitesse horizontale du vent et de l'inclinaison de la piste.

Par ailleurs, la présente invention concerne également un aéronef qui comporte un dispositif tel que spécifié ci-dessus.

Les figures du dessin annexé feront bien comprendre comment l'invention peut être réalisée. Sur ces figures, des références identiques désignent des éléments semblables.

La figure 1 représente un schéma illustrant le procédé conforme à la présente invention.

Les figures 2 à 4 représentent chacune un triangle de vitesses permettant la détermination géométrique de la pente optimisée conformément à l'invention, dans le cas d'une absence de vent, d'un vent arrière et d'un vent de face, respectivement.

La figure 5 est un schéma synoptique d'un dispositif pour la mise en oeuvre du procédé selon l'invention.

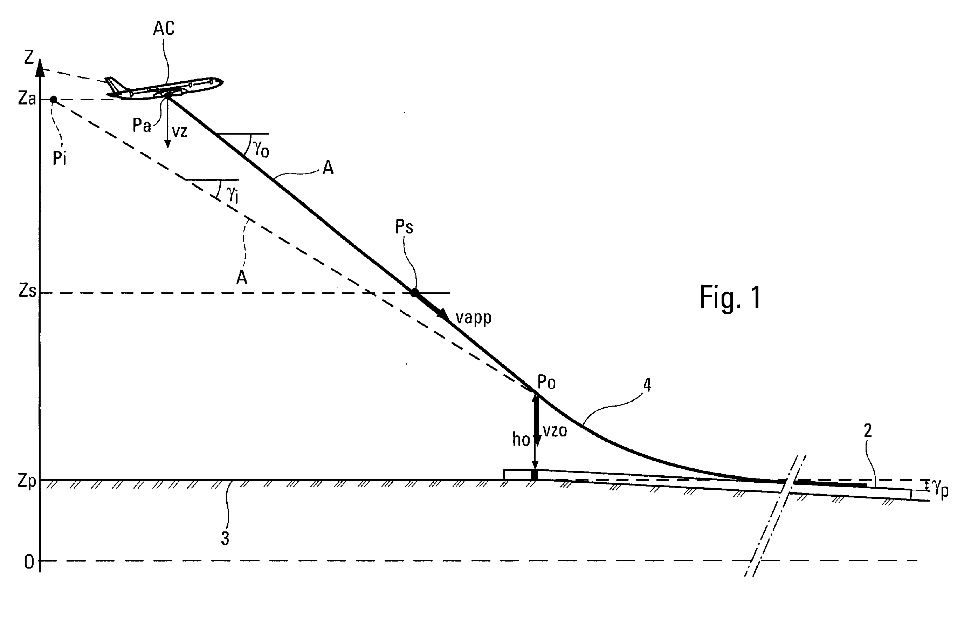

Dans la situation représentée schématiquement sur la figure 1, un aéronef AC est en phase d'approche en vue d'atterrir sur une piste 2 située à une altitude Zp. Après un vol sur le palier d'approche d'altitude Za ou après une approche intermédiaire en descente continue, l'aéronef AC intercepte un axe d'approche finale A, présentant une pente sol optimisée $\gamma_o$ déterminée de la façon décrite par la suite, au point Pa (qui correspond à l'intersection du palier Za, ou du segment de l'approche en descente continue, et de l'axe d'approche A) et descend le long dudit axe A en direction de la piste 2 pour décélérer jusqu'à vitesse d'approche stabilisée Vapp à une altitude de stabilisation Zs à environ 1000 pieds (point Ps) pour ensuite atteindre la vitesse verticale cible Vzo par rapport au sol 3 constante au point Po. Ce dernier marque le début de l'arrondi 4 qui suit la phase d'approche.

Comme le montre la figure 1, la pente sol optimisée $\gamma_o$ est supérieure à la pente sol initiale $\gamma_i$ (par exemple $\gamma_i$ =-3° et $\gamma_o$ =-4°) qui est déterminée par les règles de procédure standard.

De préférence, la pente sol optimisée $\gamma_o$ est comprise entre une valeur extrême inférieure (par exemple égale à -3°) et une valeur extrême supérieure (par exemple égale à -4,49°), de manière à ne pas réduire les marges de sécurité imposées par les autorités aériennes.

Conformément à la présente invention, afin d'optimiser l'atterrissage de l'aéronef AC sur la piste 2, on commence par :

- définir une vitesse verticale cible Vzo par rapport au sol 3 à appliquer à l'aéronef AC à l'initiation de l'arrondi. Une telle vitesse verticale sol Vzo est définie à partir des performances et des caractéristiques propres à l'aéronef, par exemple par simulations en effectuant des calculs de performance et de robustesse. La définition de Vzo résulte d'un compromis acceptable entre la sécurité portant sur l'arrondi 4 et la réduction de la pollution (sonore et atmosphérique) et de la consommation en carburant. Dans la suite, on considère que Vzo est indépendante de la masse embarquée de l'aéronef AC, de sorte que Vzo est identique quelle que soit la masse embarquée. En variante, on pourrait envisager que Vzo dépende de la masse embarquée à bord de l'aéronef, de sorte que Vzo pourrait être déterminée grâce à des abaques masse embarquée / vitesse Vzo ; et
- on détermine la pente sol optimisée $\gamma_o$ associée à l'axe d'approche A à partir de la vitesse verticale cible Vzo et de paramètres extérieurs, de la façon détaillée ci-après.

Par la suite, on entend par « paramètres extérieurs » les paramètres associés aux conditions météorologiques, aux conditions environnementales et aux caractéristiques propres de l'aéronef AC.
En particulier, parmi les paramètres extérieurs susceptibles d'intervenir dans la détermination de la pente sol optimisée selon l'invention, on a :

- la vitesse corrigée CAS de l'aéronef AC par rapport à l'air. Cette vitesse CAS est fonction de la masse M de l'aéronef et de la configuration de vol de l'aéronef AC associée à la phase d'approche. En d'autres termes, par l'utilisation de la vitesse CAS, on tient compte indirectement de la masse M et de la configuration de vol de l'aéronef AC. On notera en outre que plus la masse de l'aéronef AC à l'atterrissage est importante, plus la vitesse d'approche globale l'est également, ce qui a pour conséquence de diminuer la pente sol associée à l'axe A à iso vitesse verticale Vz, et inversement ;
- la température extérieure To à une hauteur standard ho (par exemple égale à 50 pieds). La température T de l'air ambiant agit sur la pente sol suivie associée à l'axe A à iso vitesse verticale. Si la température T est inférieure à la température standard To définie à destination, la pente sol suivie sera finalement plus élevée que la pente sol initiale $\gamma_i$ et inversement pour des températures plus élevées ;
- l'altitude Zp de la piste 2. En effet, la densité de l'air environnant varie en fonction de l'altitude de la piste Zp, de sorte que celle-ci agit directement sur la vitesse vraie TAS de l'aéronef par rapport à l'air. Ainsi, plus l'aéroport est à une altitude Zp élevée, plus la densité de l'air est faible, de sorte que plus la vitesse vraie TAS augmente et la pente sol suivie est douce ;
- l'inclinaison $\gamma_p$ de la piste 2 lorsqu'elle est disponible dans la base de navigation. La pente sol optimisée $\gamma_o$ est directement corrigée à partir de cette inclinaison $\gamma_p$, par exemple par construction géométrique ; et
- la vitesse horizontale du vent Vw qui est un des paramètres disponibles les plus influents dans la relation liant la vitesse verticale sol de l'aéronef et de la pente sol associée à l'axe d'approche A. Lorsque la vitesse verticale sol Vz de l'aéronef AC est fixée, un vent de face permet aisément et instantanément de voler le long de l'axe d'approche A avec une pente sol augmentée, à iso pente air. La vitesse horizontale du vent Vw, utilisée pour déterminer la pente sol optimisée selon le procédé de l'invention, peut être obtenue selon au moins une des façons suivantes :

• par mesure du vent au niveau de la tour de contrôle de la piste 2, sans prise en compte des rafales ; et/ou
• par récupération de données mesurées par un ou plusieurs autres aéronefs situés dans un voisinage de la piste 2 et transmises directement à l'aéronef AC.

Plusieurs méthodes d'obtention de la vitesse horizontale du vent Vw peuvent être utilisées simultanément pour minimiser les erreurs de mesure. De plus, on peut définir une plage déterminée de valeurs de vitesse Vw à prendre en compte lors de la détermination de la pente sol optimisée $\gamma_o$. Pour conserver une certaine marge de sécurité, on peut ne tenir compte que d'une partie du vent. Par exemple, jusqu'à 15kts de vent de face, 80% du vent peut être considéré. Pour des vents plus forts (dont la vitesse Vw est supérieure à 15kts), une prise en compte moins importante du vent peut être mise en oeuvre. Théoriquement, le procédé de l'invention permet de réaliser une approche finale à iso poussée, iso attitude de l'aéronef AC et iso vitesse verticale Vz, quelle que soit la vitesse horizontale du vent Vw.
Selon l'invention, pour déterminer la pente sol optimisée $\gamma_o$, on effectue les étapes suivantes :

- on détermine la densité de l'air $\rho_c$ à la hauteur standard ho à partir de la température extérieure To et de l'altitude de la piste Zp. Plus précisément, à partir de l'altitude de la piste Zp, on en déduit la pression P atmosphérique à l'altitude Zp, ce qui permet de calculer la densité de l'air $\rho_c$ à la hauteur standard ho par la relation $\rho_c = \dfrac{P}{R.To}$, où $R = 287.053 J/kg/m^3$.
- on détermine la vitesse vraie TAS de l'aéronef par rapport à l'air à partir de la vitesse CAS. Pour cela, on récupère la vitesse corrigée CAS correspondant à la vitesse d'approche considérée. Cette valeur est par exemple disponible à partir du système de gestion de vol FMS (pour Flight Management System en anglais). Ensuite, on détermine la vitesse vraie TAS par la relation $TAS = \sqrt{\dfrac{\rho_c}{\rho_o}}.K.CAS$ , où $\rho_o$ =1.225$kglm^3$ et $K$ est un coefficient de correction de compressibilité; et

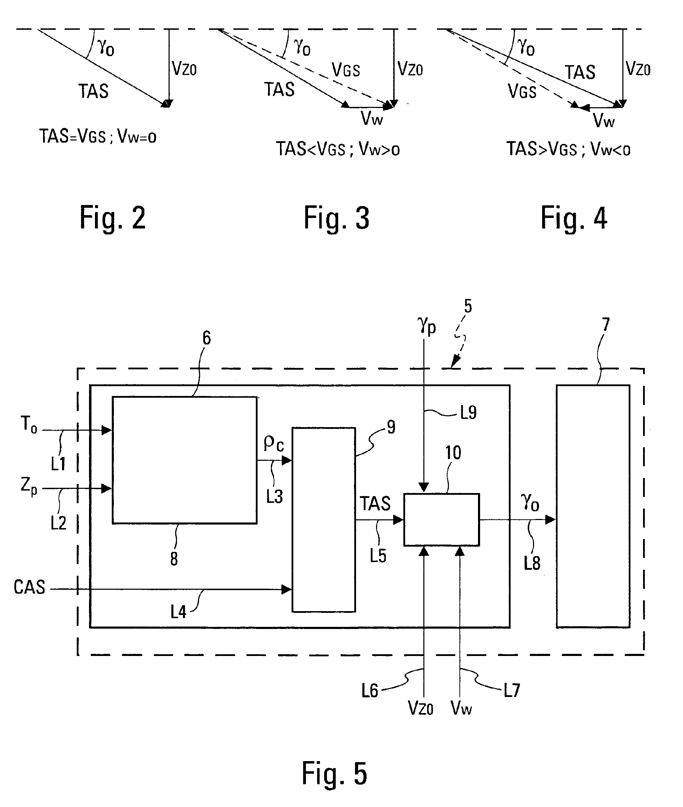

- on détermine la pente sol optimisée $\gamma_o$ à partir de la vitesse verticale cible Vzo, de la vitesse vraie TAS déterminée, de la vitesse horizontale du vent Vw et de l'inclinaison de la piste $\gamma_P$. Cette détermination peut être obtenue, de façon simplifiée, par construction géométrique d'un triangle des vitesses. En effet, comme le montrent les figures 3 à 5 (dans lequel l'inclinaison de la piste est nulle) qui présentent respectivement le cas où il n'y a pas de vent (Vw=0, figure 2), le cas où il existe un vent arrière (Vw>0, figure 3) et le cas où il existe un vent de face (Vw<0, figure 4), on obtient, par construction d'un triangle des vitesses à partir de la vitesse TAS déterminée et de la vitesse verticale cible Vzo constante, la pente sol optimisée $\gamma_o$. Lors de l'absence de vent (figure 2), la vitesse de l'aéronef AC par rapport au sol Vgs est égale à la vitesse TAS (soit TAS = Vgs). Dans le cas d'un vent arrière (figure 3), la vitesse Vgs est supérieure à la vitesse TAS (soit TAS < Vgs) et $\gamma_o$ est moins élevée que celle obtenue en l'absence de vent. Dans le cas d'un vent de face (figure 4), la vitesse Vgs est inférieure à la vitesse TAS soit (TAS > Vgs) et $\gamma_o$ est plus élevée que celle obtenue en l'absence de vent.

Ainsi, après avoir déterminé la pente sol optimisée $\gamma_o$ de la façon précitée, dès l'interception par l'aéronef AC de l'axe d'approche A au point Pa, on guide l'aéronef AC pour qu'il suive la pente sol optimisée $\gamma_o$, associée à l'axe d'approche A, et qu'il atteigne la vitesse verticale cible Vzo à l'initiation de la phase d'arrondi 4 (point Po).

Pour déterminer la pente sol optimisée $\gamma_o$ et guider l'aéronef AC de la façon précitée, on peut utiliser le dispositif 5 illustré sur la figure 5. Il comprend

- des moyens 6 de détermination de la pente sol optimisée $\gamma_o$, associée à l'axe d'approche A à suivre, qui reçoivent la température extérieure To à une hauteur standard ho, l'inclinaison $\gamma_p$ et l'altitude Zp de la piste 2, la vitesse corrigée CAS, la vitesse verticale cible Vzo et la vitesse horizontale du vent Vw; et
- des moyens 7 de guidage de l'aéronef dès l'interception (point Pa) par ce dernier de l'axe d'approche A, pour lui imposer le suivi de la pente optimisée $\gamma_o$ associée et lui faire atteindre la vitesse verticale cible Vzo au point Po.

Les moyens de détermination 6 comportent :

- des moyens 8 pour calculer la densité de l'air $\rho_c$ à la hauteur standard ho de la façon définie ci-dessus. Ils reçoivent la température extérieure To et l'altitude de la piste Zp, par l'intermédiaire des liaisons L1 et L2. Les moyens 8 sont aptes à délivrer, en sortie, la densité de l'air $\rho_c$ à la hauteur ho ;
- des moyens 9 pour calculer la vitesse vraie TAS de l'aéronef AC comme indiqué précédemment. Ils reçoivent la densité de l'air $\rho_c$ déterminée par les moyens 8 et la vitesse corrigée CAS, par l'intermédiaire des liaisons L3 et L4. Les moyens 9 sont aptes à délivrer, en sortie, la vitesse vraie TAS ; et
- des moyens 10 pour calculer la pente sol optimisée $\gamma_o$ comme mentionné ci-dessus. Ils reçoivent la vitesse vraie TAS déterminée par les moyens 9, la vitesse verticale cible Vzo , la vitesse horizontale du vent Vw, ainsi que l'inclinaison de la piste $\gamma_p$ par l'intermédiaire des liaisons L5, L6, L7 et L9. Ils sont aptes à délivrer, en sortie, la pente sol optimisée $\gamma_o$ afin qu'elle puisse être traitée par les moyens 7 de guidage.

Les moyens de détermination 6 de la pente optimisée $\gamma_o$ peuvent faire partie intégrante du système de gestion de vol FMS ou d'un autre système embarqué en lien avec le système de gestion du vol. En variante, ils peuvent être externes à l'aéronef et se présenter sous la forme d'un ordinateur portable ou même être intégrés dans une station au sol apte à communiquer à l'aéronef AC la pente optimisée $\gamma_o$. La pente optimisée $\gamma_o$ peut être transmise des moyens de détermination 6 au FMS, ou bien encore être entrée manuellement dans le FMS par les pilotes.

En outre, les moyens de guidage 7 comportent les moyens suivants (non représentés sur les figures) :

- un moyen de calcul qui est destiné à déterminer de façon usuelle des consignes de pilotage, à partir d'informations reçues des moyens de détermination 6 par l'intermédiaire de la liaison L8 ;
- au moins un moyen d'aide au pilotage, par exemple un dispositif de pilotage automatique et/ou un directeur de vol, qui détermine à partir des consignes de pilotage reçues dudit moyen de calcul des ordres de pilotage de l'aéronef AC ; et
- des moyens d'actionnement d'organes commandés, tels que par exemple des gouvernes (de direction, de profondeur, ...) de l'aéronef, auxquels on applique les ordres de pilotage ainsi déterminés.

Par ailleurs, on peut envisager que la détermination de la pente sol optimisée $\gamma_o$ et le guidage de l'aéronef le long de l'axe A de pente $\gamma_o$ soient optionnels, en prévoyant une fonction d'activation et de désactivation de ces opérations sous la forme, par exemple, d'un moyen d'activation intégré dans le cockpit de l'aéronef AC.

De plus, on peut également prévoir qu'une indication soit affichée à l'intérieur du cockpit (par exemple sous la forme d'un signal visuel) pour prévenir les pilotes que le procédé d'optimisation de l'atterrissage conforme à l'invention est activé. Ainsi, on évite de surprendre les pilotes par une interception plus tardive de l'axe d'approche A à pente augmentée par rapport à celle relative à des approches conventionnelles (pente sol égale à -3°).

**Revendications**

1. Procédé pour optimiser l'atterrissage d'un aéronef (AC) sur une piste (2), ledit atterrissage comprenant une phase d'approche, définie par un axe d'approche (A) à suivre auquel est associée une pente sol prédéfinie ($\gamma_i$), et une phase d'arrondi (4), **caractérisé en ce que** :

   - dans une étape préliminaire :

      ■ on définit, à partir des performances et des caractéristiques propres audit aéronef (AC), une vitesse verticale cible par rapport au sol (Vzo) à appliquer audit aéronef à l'initiation de la phase d'arrondi (4) ; et
      ■ on détermine, en fonction de ladite vitesse verticale cible (Vzo) et d'au moins un paramètre extérieur, une pente sol optimisée ($\gamma_o$), associée à l'axe d'approche (A), qui est supérieure ou égale à la pente sol prédéfinie ($\gamma_i$), et

   - dès l'interception, par l'aéronef (AC), de l'axe d'approche (A), on guide ledit aéronef (AC) pour qu'il suive la pente sol optimisée ($\gamma_o$) déterminée, associée audit axe d'approche (A), et qu'il atteigne la vitesse verticale cible préalablement définie (Vzo) à l'initiation de la phase d'arrondi (4).

2. Procédé selon la revendication précédente, **caractérisé en ce que** ledit paramètre extérieur appartient au groupe de paramètres comprenant :

   - la vitesse corrigée (CAS) de l'aéronef (AC) par rapport à l'air ;
   - la température extérieure (To) à une hauteur standard (ho) ;
   - la vitesse horizontale du vent (Vw) ;
   - l'inclinaison ($\gamma_P$) de la piste (2) par rapport à l'horizontale ; et
   - l'altitude (Zp) de la piste (2).

3. Procédé selon la revendication précédente, **caractérisé en ce que** la pente sol optimisée ($\gamma_o$) est déterminée à partir de la vitesse verticale cible (Vzo), de la vitesse corrigée (CAS), de la vitesse horizontale du vent (Vw), de la température extérieure (To) à la hauteur standard (ho), ainsi que de l'inclinaison ($\gamma_P$) et de l'altitude (Zp) de la piste (2).

4. Procédé selon la revendication précédente, **caractérisé en ce que** la vitesse horizontale du vent (Vw), prise en compte lors de la détermination de la pente sol optimisée ($\gamma_o$), appartient à une plage déterminée de valeurs.

5. Procédé selon l'une des revendications 3 ou 4, **caractérisé en ce que**, pour déterminer la pente sol optimisée ($\gamma_o$), on effectue les étapes suivantes :

   - on détermine la densité de l'air ($\rho_c$) à la hauteur standard (ho) à partir de la température extérieure (To) et de l'altitude (Zp) de la piste ;
   - on détermine la vitesse vraie (TAS) de l'aéronef par rapport à l'air à partir de la vitesse (CAS) et de la densité de l'air déterminé ($\rho_c$) ; et
   - on détermine la pente sol optimisée ($\gamma_o$) à partir de la vitesse verticale cible (Vzo), de la vitesse vraie (TAS) déterminée, de la vitesse horizontale du vent (Vw) et de l'inclinaison ($\gamma_P$) de la piste.

6. Procédé selon la revendication précédente, **caractérisé en ce que** la détermination de la pente sol optimisée ($\gamma_o$) est obtenue par construction géométrique d'un triangle des vitesses.

7. Procédé selon l'une des revendications précédentes, **caractérisé en ce que** la vitesse verticale cible (Vzo) est définie au préalable pour chaque type d'aéronef.

8. Procédé selon l'une des revendications précédentes, **caractérisé en ce que** la pente sol optimisée ($\gamma_o$) est comprise entre une valeur extrême inférieure et une valeur extrême supérieure prédéfinies, de préférence égales respectivement à -3° et à -4,49°.

9. Dispositif pour optimiser l'atterrissage d'un aéronef (AC) sur une piste (2), ledit atterrissage comprenant une phase d'approche, définie par un axe d'approche (A) à suivre auquel est associée une pente sol prédéfinie ($\gamma_i$), et une phase d'arrondi (4), **caractérisé en ce qu'**il comprend :

   - des moyens (6) pour déterminer, en fonction d'au moins un paramètre extérieur et d'une vitesse verticale cible (Vzo) préalablement définie à partir des performances et des caractéristiques propres audit aéronef (AC), une pente sol optimisée ($\gamma_o$) associée à l'axe d'approche (A) à suivre qui est supérieure ou égale à la pente sol prédéfinie ($\gamma_i$) ; et
   - des moyens (7) pour guider l'aéronef (AC) dès l'interception par ce dernier de l'axe d'approche (A), afin qu'il suive la pente sol optimisée ($\gamma_o$) déterminée, associée audit axe d'approche (A), et qu'il atteigne la vitesse verticale cible préalablement définie (Vzo) à l'initiation de la phase d'arrondi (4).

10. Dispositif selon la revendication précédente, **caractérisé en ce que**, la pente sol optimisée ($\gamma_o$) étant déterminée à partir de ladite vitesse verticale cible (Vzo), de la vitesse corrigée (CAS), de la vitesse horizontale du vent (Vw), de la température extérieure (To) à une hauteur standard (ho), ainsi que de l'inclinaison ($\gamma_P$) et de l'altitude (Zp) de la piste (2), lesdits moyens de détermination (6) comprennent en outre :

- des moyens (8) pour calculer la densité de l'air ($\rho_c$) à la hauteur standard (ho) en fonction de la température extérieure (To) et de l'altitude de la piste (Zp);
- des moyens (9) pour calculer la vitesse vraie (TAS) de l'aéronef par rapport à l'air à partir de la vitesse (CAS) et de la densité de l'air déterminé ($\rho_c$) ; et
- des moyens (10) pour calculer la pente sol optimisée ($\gamma_o$) à partir de la vitesse verticale cible (Vzo), de la vitesse vraie (TAS) déterminée, de la vitesse horizontale du vent (Vw) et de l'inclinaison ($\gamma_P$) de la piste.

11. Aéronef, **caractérisé en ce qu'**il comporte un dispositif (5) tel que spécifié sous l'une des revendications 9 ou 10.

**Patentansprüche**

1. Verfahren zum Optimieren der Landung eines Luftfahrzeugs (AC) auf einer Piste (2), wobei die Landung eine Anflugphase, die durch eine zu befolgende Anflugachse (A) definiert ist, mit der ein vorgegebenes Bodengefälle ($\gamma_i$) verknüpft ist, und eine Abfangphase (4) umfasst, **dadurch gekennzeichnet, dass**

- in einer Vorbereitungsphase:

■ ausgehend von den dem Luftfahrzeug (AC) eigenen Leistungen und Charakteristiken eine angestrebte senkrechte Geschwindigkeit im Verhältnis zum Boden (Vzo) definiert wird, die auf das Luftfahrzeug zu Beginn der Abfangphase (4) anzuwenden ist; und
■ in Abhängigkeit von der angestrebten senkrechten Geschwindigkeit (Vzo) und mindestens einem Außenparameter ein optimiertes Bodengefälle ($\gamma_o$) bestimmt wird, das mit der Anflugachse (A) verknüpft ist und größer oder gleich dem vorgegebenen Bodengefälle ($\gamma_i$) ist, und

- sobald das Luftfahrzeug (AC) die Anflugachse (A) kreuzt, das Luftfahrzeug (AC) geleitet wird, damit es dem bestimmten optimierten Bodengefälle ($\gamma_o$) folgt, das mit der Anflugachse (A) verknüpft ist, und damit es die zuvor definierte, angestrebte senkrechte Geschwindigkeit (Vzo) zu Beginn der Abfangphase (4) erreicht.

2. Verfahren nach dem vorhergehenden Anspruch, **dadurch gekennzeichnet, dass** der Außenparameter zu der Parametergruppe gehört, die Folgendes umfasst:

- die korrigierte Geschwindigkeit (CAS) des Luftfahrzeugs (AC) im Verhältnis zur Luft;
- die Außentemperatur (To) auf einer Standardhöhe (ho) ;
- die waagerechte Windgeschwindigkeit (Vw);
- die Neigung ($\gamma_p$) der Piste (2) im Verhältnis zur Waagerechten; und
- die Meereshöhe (Zp) der Piste (2).

3. Verfahren nach dem vorhergehenden Anspruch, **dadurch gekennzeichnet, dass** das optimierte Bodengefälle ($\gamma_o$) ausgehend von der angestrebten senkrechten Geschwindigkeit (Vzo), der korrigierten Geschwindigkeit (CAS), der waagerechten Windgeschwindigkeit (Vw) der Außentemperatur (To) auf der Standardhöhe (ho), sowie der Neigung ($\gamma_p$) und der Meereshöhe (Zp) der Piste (2) bestimmt wird.

4. Verfahren nach dem vorhergehenden Anspruch, **dadurch gekennzeichnet, dass** die waagerechte Windgeschwindigkeit (Vw), die bei der Bestimmung des optimierten Bodengefälles ($\gamma_o$) berücksichtigt wird, zu einem bestimmten Wertebereich gehört.

5. Verfahren nach einem der Ansprüche 3 oder 4, **dadurch gekennzeichnet, dass** zum Bestimmen des optimierten Bodengefälles ($\gamma_o$) folgende Schritte ausgeführt werden:

- Bestimmen der Luftdichte ($\rho_c$) auf der Standardhöhe (ho) ausgehend von der Außentemperatur (To) und der Meereshöhe (Zp) der Piste;
- Bestimmen der tatsächlichen Geschwindigkeit (TAS) des Luftfahrzeugs im Verhältnis zur Luft, ausgehend von der Geschwindigkeit (CAS) und der bestimmten Luftdichte ($\rho_c$) ; und
- Bestimmen des optimierten Bodengefälles ($\gamma_o$), ausgehend von der angestrebten senkrechten Geschwindigkeit (Vzo), der bestimmten tatsächlichen Geschwindigkeit (TAS), der waagerechten Windgeschwindigkeit (Vw) und der Neigung ($\gamma_p$) der Piste.

6. Verfahren nach dem vorhergehenden Anspruch, **dadurch gekennzeichnet, dass** die Bestimmung des optimierten Bodengefälles ($\gamma_o$) durch geometrische Konstruktion eines Geschwindigkeitsdreiecks erzielt wird.

7. Verfahren nach einem der vorhergehenden Ansprüche, **dadurch gekennzeichnet, dass** die angestrebte senkrechte Geschwindigkeit (Vzo) im Voraus für jede Art von Luftfahrzeug definiert wird.

8. Verfahren nach einem der vorhergehenden Ansprüche, **dadurch gekennzeichnet, dass** das optimierte Bodengefälle ($\gamma_o$) zwischen einem vorgegebenen unteren Extremwert und einem vorgegebenen oberen Extremwert liegt, die bevorzugt jeweils gleich -3° und -4,49° sind.

9. Vorrichtung zum Optimieren der Landung eines Luftfahrzeugs (AC) auf einer Piste (2), wobei die Landung eine Anflugphase, die durch eine zu befolgende Anflugachse (A) definiert ist, mit der ein vorgegebenes Bodengefälle ($\gamma_i$) verknüpft ist, und eine Abfangphase (4) umfasst, **dadurch gekennzeichnet, dass** sie Folgendes umfasst:

- Mittel (6), um in Abhängigkeit von mindestens einem Außenparameter und einer angestrebten senkrechten Geschwindigkeit (Vzo), die zuvor ausgehend von den dem Luftfahrzeug (AC) eigenen Leistungen und Charakteristiken definiert wurde, ein optimiertes Bodengefälle ($\gamma_o$) zu bestimmen, das mit der zu befolgenden Anflugachse (A) verknüpft ist und größer oder gleich dem vorgegebenen Bodengefälle ($\gamma_i$) ist; und
- Mittel (7), um das Luftfahrzeug (AC) zu leiten, sobald dieses die Anflugachse (A) kreuzt, damit es dem bestimmten optimierten Bodengefälle ($\gamma_o$) folgt, das mit der Anflugachse (A) verknüpft ist, und damit es die zuvor definierte, angestrebte senkrechte Geschwindigkeit (Vzo) zu Beginn der Abfangphase (4) erreicht.

10. Vorrichtung nach dem vorhergehenden Anspruch, **dadurch gekennzeichnet, dass** da das optimierte Bodengefälle ($\gamma_o$), ausgehend von der angestrebten senkrechten Geschwindigkeit (Vzo), der korrigierten Geschwindigkeit (CAS), der waagerechten Windgeschwindigkeit (Vw), der Außentemperatur (To) auf der Standardhöhe (ho), sowie der Neigung ($\gamma p$) und der Meereshöhe (Zp) der Piste (2) bestimmt wird, die Bestimmungsmittel (6) ferner Folgendes umfassen:

- Mittel (8) zum Berechnen der Luftdichte ($\rho_c$) auf der Standardhöhe (ho) in Abhängigkeit von der Außentemperatur (To) und der Meereshöhe (Zp) der Piste;
- Mittel (9) zum Berechnen der tatsächlichen Geschwindigkeit (TAS) des Luftfahrzeugs im Verhältnis zur Luft, ausgehend von der Geschwindigkeit (CAS) und der bestimmten Luftdichte ($\rho_c$); und
- Mittel (10) zum Berechnen des optimierten Bodengefälles ($\gamma_o$), ausgehend von der angestrebten senkrechten Geschwindigkeit (Vzo), der bestimmten tatsächlichen Geschwindigkeit (TAS), der waagerechten Windgeschwindigkeit (Vw) und der Neigung ($\gamma_p$) der Piste.

11. Luftfahrzeug, **dadurch gekennzeichnet, dass** es eine Vorrichtung (5) umfasst, wie sie nach einem der Ansprüche 9 oder 10 vorgegeben ist.

**Claims**

1. A method for optimizing the landing of an aircraft (AC) on a runway (2), said landing comprising an approach phase, defined by an approach path (A) to be tracked with which there is associated a predefined ground slope ($\gamma_i$), and a flaring phase (4), **characterized in that**:

- in a preliminary step:

■ a target vertical speed in relation to the ground to be applied to said aircraft upon the initiation of the flaring phase (4) is defined on the basis of performances and characteristics being specific to said aircraft (AC); and
■ as a function of said target vertical speed (Vzo) and of at least one outside parameter, an optimized ground slope ($\gamma_o$), associated with the approach path (A), is determined, which is higher than or equal to the predetermined ground slope, and

- upon the interception by the aircraft (AC) of the approach path (A), said aircraft (AC) is guided so as to track the determined optimized ground slope ($\gamma_o$), associated with said approach path (A), and to reach the preliminarily defined target vertical speed (Vzo) upon the initiation of the flaring phase (4).

2. The method according to the preceding claim, **characterized in that** said outside parameter belongs to the group of parameters comprising:

- the calibrated airspeed (CAS) of the aircraft (AC) with respect to the air;
- the outside temperature (To) at a standard height (ho) ;
- the horizontal speed of the wind (Vw);
- the inclination of the runway (2) with respect to the horizontal; and
- the altitude (Zp) of the runway (2).

3. The method according to the preceding claim, **characterized in that** the optimized ground slope $(\gamma_o)$ is determined from the target vertical speed (Vzo), the calibrated airspeed (CAS), the horizontal speed of the wind (Vw), the outside temperature (To) at the standard height (ho), as well as from the inclination $(\gamma_P)$ and from the altitude (Zp) of the runway (2).

4. The method according to the preceding claim, **characterized in that** the horizontal speed of the wind (Vw), taken into consideration during the determination of the optimized ground slope $(\gamma_o)$, belongs to a determined range of values.

5. The method according to one of claims 3 and 4, **characterized in that**, for determining the optimized ground slope, the following steps are carried out:

- the density of the air $(\rho_c)$ at the standard height (ho) is determined from the outside temperature (To) and from the altitude (Zp) of the runway;
- the true speed (TAS) of the aircraft with respect to the air is determined from the speed (CAS) and from the determined density of the air $(\rho_c)$; and
- the optimized ground slope $(\gamma_o)$ is determined from the target vertical speed (Vzo), from the determined true speed (TAS), from the horizontal speed of the wind (Vw) and from the inclination $(\gamma_P)$ of the runway.

6. The method according to the preceding claim, **characterized in that** the determination of the optimized ground slope $(\gamma_o)$ is obtained thru geometric construction of a speed triangle.

7. The method according to one of the preceding claims, **characterized in that** the target vertical speed (Vzo) is preliminarily defined for each type of air-craft.

8. The method according to one of the preceding claims, **characterized in that** the optimized ground slope $(\gamma_o)$ ranges between a predefined lower extreme value and a predefined higher extreme value, preferably equal respectively to -3° and to -4.49°.

9. A device for optimizing the landing of an air-craft (AC) on a runway (2), said landing comprising an approach phase, defined by an approach path (A) to be tracked with which there is associated a predefined ground slope $(\gamma_i)$, and a flaring phase (4), **characterized in that** it comprises:

- means (6) for determining, as a function of at least one outside parameter and a target vertical speed (Vzo) preliminarily defined from performances and from characteristics being specific to said aircraft (AC), an optimized ground slope $(\gamma_o)$ associated with the approach path (A) to be tracked being higher than or equal to the predefined ground slope $(\gamma_i)$ ; and
- means (7) for guiding the aircraft (AC) upon the interception of the approach path (A) by the latter, so that it tracks the determined optimized ground slope $(\gamma_o)$, associated with to said approach path (A), and it reaches the preliminarily defined target vertical speed (Vzo) upon the initiation of the flaring phase (4).

10. The device according to the preceding claim, **characterized in that**, the optimized ground slope $(\gamma_o)$ being determined from said target vertical speed (Vzo), the calibrated airspeed (CAS), the horizontal speed of the wind (Vw), the outside temperature (To) at the standard height (ho), as well as from the inclination $(\gamma_P)$ and from the altitude (Zp) of the runway (2), said determination means (6) further comprise:

- means (8) for calculating the density of the air $(\rho_c)$ at the standard height (ho) as a function of the outside temperature (To) and of the altitude of the runway (Zp) ;
- means (9) for calculating the true speed (TAS) of the aircraft with respect to the air from the speed (CAS) and the determined air density $(\rho_c)$ ; and
- means (10) for calculating the optimized ground slope $(\gamma_o)$ from the target vertical speed (Vzo), from the determined true speed (TAS), from the horizontal speed of the wind (Vw) and from the inclination $(\gamma_P)$ of the runway.

11. An aircraft, **characterized in that** it comprises a device (5) such as specified in one of claims 9 to 10.

Fig. 1

EP 2 498 159 B1

TAS=VGS ; Vw=0

Fig. 2

TAS<VGS ; Vw>0

Fig. 3

TAS>VGS ; Vw<0

Fig. 4

Fig. 5

**RÉFÉRENCES CITÉES DANS LA DESCRIPTION**

**Documents brevets cités dans la description**

- US 2009050746 A
- US 5337982 A